# EUROPÄISCHE PATENTSCHRIFT

(11) **EP 0 496 235 B1**
(45) Veröffentlichungstag und Bekanntmachung des Hinweises auf die Patenterteilung: **02.08.1995**
(21) Anmeldenummer: 92100409.9
(22) Anmeldetag: 13.01.1992
(51) Int. Cl.: H04M 1/19, H04M 1/03

(54) **Handapparat für Telefone**
Telephone handset
Combiné téléphonique

(30) Priorität: 24.01.1991 DE 4102000
(43) Veröffentlichungstag der Anmeldung: 29.07.1992
(73) Patentinhaber: HAGENUK GMBH, D-24118 Kiel (DE)
(72) Erfinder: Constantin, Hermann, Dipl.-Ing., W-2315 Kirchbarkau (DE); Gusella, Bernd, W-2309 Honigsee (DE)
(74) Vertreter: Hansmann, Dierk, Dipl.-Ing.

(56) Entgegenhaltungen:
- DE-A- 1 437 902
- GB-A- 2 187 062
- GB-A- 2 218 303
- US-A- 4 463 222
- US-A- 4 773 091
- PATENT ABSTRACTS OF JAPAN vol. 13, no. 240 (E-767)6. Juni 1989 & JP-A-10 42 966 ( NEC CORP.) 15. Februar 1989

## Beschreibung

Die Erfindung betrifft einen Handapparat für Telefone mit einem als Richtmikrofon ausgebildeten Mikrofon und einer Hörkapsel, die über ein Verbindungselement mit Abstand in Kapselaufnahmen angeordnet sind.

Bei bekannten Handapparaten ist das Verbindungselement als Abstandshalter zwischen Mikrofon und Hörkapsel rohrförmig ausgebildet und weist einen Knick bzw. eine geschwungene Ausbildung auf, um das Mikrofon näher zum Mundbereich einer den Handapparat benutzenden Person zu positionieren. Diese Positionierung des Mikrofons mit einem geringem Abstand zum Mund ermöglicht eine Herabsetzung der Empfindlichkeit des Mikrofons, wodurch eine erhebliche Unterdrückung von aus einer Umgebung des Handapparates einwirkenden Störgeräuschen ermöglicht wird.

Die durch diese Formgebung der Handapparate bestehende Möglichkeit zur Positionierung des Mikrofons in einer unmittelbaren Umgebung des Mundes wird von den die Handapparate benutzenden Personen jedoch in der Regel nicht genutzt, da die Positionierung in unmittelbarer Umgebung des Mundes als unangenehm empfunden wird. Ursachen hierfür liegen beispielsweise darin, daß durch den Handapparat die entströmende Atemluft der Nase abgeleitet wird und zu thermischen Empfindungen bzw. zu Luftzugempfindungen im Bereich der Gesichtshaut führt. Darüber hinaus liegt ein in unmittelbarer Umgebung des Mundes positionierter Handapparat im Blickfeld des Benutzers und wird unbewußt als störend empfunden. Dieses führt in der Praxis dazu, daß die Handapparate in der Regel derart positioniert werden, daß das Mikrofon stärker zum Hals als zum Mund des Benutzers weist. Die Gebrauchsposition weicht damit erheblich von der Meßposition ab.

Auch ist es üblich, den Handapparat direkt zur Seite zu schwenken. Dieses Verschwenken des Mikrofons hat die Folge, daß die Muschel für die Hörkapsel nicht dicht am Ohr anliegt und hieraus ein akustisches Leck resultiert, das zu einem in den Tiefen reduzierten Frequenzbereich führt und das Klangbild der übertragenen akustischen Informationen unnatürlich dünn und hochtönig erscheinen läßt. Da gerade die im tiefen und mittleren Frequenzbereich liegenden Schallanteile für den subjektiv empfundenen Lautstärkeeindruck wichtig sind, wird durch dieses Leck auch die Empfangslautstärke beeinträchtigt. Weiter bildet sich über das Leck zwischen Handapparat und menschlicher Wange ein schallführender Kanal zum Mikrofon, wodurch die beiden Wandler des Handapparates akustisch verkoppelt werden. Diese Verkopplung führt insbesondere in einem digitalen Telefonnetz zu Echoerscheinungen, die die Verständigung beeinträchtigen.

Bei einer Reihe von Anwendungen wird auch der knickförmige Verlauf des Verbindungselementes als nachteilig empfunden, da beispielsweise Handapparate von schnurlosen Telefonen von einem Teilnehmer in einer Brusttasche des Hemdes mitgeführt werden sollen. Ein Versuch zu einer Lösung dieses Problems besteht beispielsweise darin, das Mikrofon über eine Klappe im Gesprächszustand derart zu verschwenken, daß sich eine durch Normung vorgegebene Position ergibt. Die Verwendung derartiger Klappen hat jedoch eine Bruchanfälligkeit zur Folge. Darüber hinaus ist ein Verbindungskabel des Handapparathauptteiles zum Mikrofon erheblichen Belastungen ausgesetzt.

Aus der JP 57 99 852 A. In: Patents Abstracts of Japan, Section E, Vol. 6 (1982), No. 185 (E 132) ist es bekannt, ein Gehäuse eines Handapparates derart auszubilden, daß sich eine von der Aufnahme der Hörkapsel aufgespannte Bezugsfläche derart in einem Winkel zu einer von der Mikrofonaufnahme aufgespannten Fläche erstreckt, daß sich in Richtung auf die Mikrofonaufnahme ein Winkelverlauf mit einem zunehmenden Abstand ergibt. Das wesentliche Merkmal bei diesem Gehäuse besteht jedoch darin, daß eine bereichsweise transparente Ausbildung vorgesehen ist, um ein optisches Erkennen von eingebauten Elementen zu ermöglichen. Aufgrund der konstruktiven Ausbildung dieses Gehäuses ist es jedoch nicht möglich, ein den Standardanforderungen genügendes Telefonieren zu ermöglichen. Insbesondere ist es nicht möglich, eine ausreichende Übertragungsqualität bei einem Umgebungsgeräusch in der Nähe von 55 dB (A) zu ermöglichen. Die ebene Ausbildung im Bereich der Mikrofonaufnahme dient bei diesem Gehäuse lediglich dazu, bei einem Ablegen auf einer flachen Auflage, insbesondere bei einem Ablegen auf einer akustisch harten Platte, die Mikrofonöffnung derart zu verschließen, daß ein Auftreten von Pfeifgeräuschen verhindert wird.

Aus der DE-B-11 71 468 sind Maßnahmen bekannt, die es ermöglichen, Umgebungsgeräusche sowohl einem vorderen als auch einem rückwärtigen Bereich des Mikrofones zuzuführen. Durch diese gleichmäßige Zuführung wirken sich Schallwellen der Umgebungsgeräusche gleichmäßig auf die Membran des Mikrofones aus und vermeiden hierdurch nennenswerte Membranbewegungen. Die betreffenden Geräusche werden deshalb nicht in elektrische Signale umgesetzt. Nachteilig ist bei dieser Anordnung, daß das Mikrofon mechanisch geschwenkt werden muß, um in die optimale Position versetzt zu werden.

Aufgabe der vorliegenden Erfindung ist es daher, einen Handapparat der einleitend genannten Art so zu verbessern, daß eine als angenehm empfundene Positionierung des Mikrofons ermöglicht wird und gleichzeitig eine entsprechend der üblichen Anordnung gleichwertige Übertragungsqualität und Störgeräuschunterdrückung gewährleistet ist.

Diese Aufgabe wird erfindungsgemäß dadurch gelöst, daß im Bereich der Aufnahme für das Mikrofon wenigstens eine Schalldurchtrittsöffnung zur rückwärtigen Schallzuführung an einer Begrenzungswandung angeordnet ist, sich im Bereich einer das Mikrofon begrenzenden Einsprache eine sich über die Einsprache erhebende und das Mikrofon bereichsweise umschließende Umrandung erstreckt, die in einer der Hörkapsel abgewandten Richtung unterbrochen ist und daß mindestens ein Teil der rückwärtigen Schalldurchtrittsöffnungen in eine parallel zu einer Flächennormalen der Einsprache orientierte Richtung und ein weiterer Teil der Schalldurchtrittsöffnung quer zur Flächennormalen weist.

Bei einer Positionierung der Anlagefläche im Bereich eines menschlichen Ohres erfolgt automatisch eine Positionierung des Mikrofons seitlich des Mundbereiches. Diese Positionierung wird von einem Benutzer des Handapparates als angenehm empfunden, so daß der Benutzer keine Veranlassung hat, den Kontakt der Anlagefläche zu verändern. Hieraus resultiert eine gute Abdichtung am menschlichen Ohr und eine vollständige Übertragung des Telefon-Frequenzbereiches auf das Ohr des Benutzers. Die abgewinkelte Positionierung der Anlagefläche hat darüber hinaus den Vorteil, daß bei einer Ablage des Handapparates auf einer glatten und akustisch harten Platte von der Hörkapsel abgestrahlte Schallwellen nicht unmittelbar das Mikrofon erreichen können, sondern daß die Abstrahlung der Schallwellen in eine dem Mikrofon abgewandte Richtung erfolgt. Weiterhin wird der schallführende Kanal zwischen Handapparat und menschlicher Wange weit geöffnet, so daß die bei einem eventuell vorhandenen Leck entsprechende Verkopplung minimiert wird.

Weiterhin wird zur Kompensation des großen Abstands vom menschlichen Mund vorgeschlagen, daß das Mikrofon als ein eine Richtcharakteristik aufweisendes Gradientenmikrofon ausgebildet ist. Aufgrund der Richtcharakteristik des Gradientenmikrofons kann eine höhere Empfindlichkeit, die zur Speisung einer Anschlußleitung mit einem vorgeschriebenen Pegel nunmehr erforderlich ist, eingestellt und gleichzeitig eine ausreichende Dämpfung von Umweltgeräuschen erzielt werden.

Alternativ ist vorgesehen, daß das Mikrofon mit einer teilweisen Schnellempfindlichkeit zur Ausbildung einer eingeschränkten Achtercharakteristik ausgebildet ist.

Die Richtcharakteristik des Gradientenmikrofons wird dadurch bestimmt, daß schalldurchlässige Öffnungen in der Achse der Vorderseite der Membran sowie seitlich davon angeordnet sind, wodurch eine Richtcharakteristik entsteht, die zum menschlichen Mund hinweist ohne daß ein mechanisches Verschwenken, das die designerische Gestaltung des Handapparets beeinflussen würde, vonnöten ist. Eine weitere Entkopplung von Mikrofon und Hörkapsel beim Ablegen des Handapparats auf einer akustisch harten Platte erfolgt dadurch, daß um die Mikrofoneinsprache herum eine bereichsweise umschließende Umrandung vorgesehen wird, die bei der genannten Ablage ein Volumen vor dem Mikrofon bildet. Dieses Volumen hat eine doppelte Funktion. Einerseits wird die erzielte Richtcharakteristik auch bei der Ablage auf einer akustisch harten Platte beibehalten. Diese ist ja, wie bereits beschrieben, zum menschlichen Mund hin gerichtet und weist damit in entkoppelnder Weise von der Hörkapsel weg. Andererseits tritt bei nicht völlig dichter Auflage eine Drucktransformation ein, weil über einen kleinen Durchlaß ein Druck in einem größeren Volumen nicht unmittelbar aufgebaut werden kann. Das wirkt sich ebenfalls günstig auf die Entkopplung der beiden Wandler aus.

Eine besonders vorteilhafte Lösung ergibt sich dadurch, daß die Umrandung im wesentlichen u-förmig ausgebildet ist und sich mit einem Basisschenkel im wesentlichen quer zur Längsachse und mit Seitenschenkeln im wesentlichen parallel zur Längsachse erstreckt sowie derart angeordnet ist, daß der Basisschenkel im Bereich einer der Begrenzung abgewandten Ausdehnung der Umrandung angeordnet ist. Der verkoppelnde Schall der Hörkapsel wird dadurch bei der Ablage auf einer harten Platte um den Handapparat herumgeleitet und findet erst hinten Einlaß. Dort befindet sich aber gleichzeitig mindestens eine Öffnung, die zur Gradientenbildung vorgesehen ist. Somit ist eine unmittelbare Kompensation des verkoppelnden Schalls gegeben, denn der Schalleintritt entspricht dem des Störschalls, der, wie bereits beschrieben durch den entsprechenden Einbau des Mikrofons kompensiert wird.

Eine günstige Handhabung des Handapparates wird dadurch ermöglicht, daß die Aufnahme für die Hörkapsel mit ihrer Muschel, die eine Bezugsfläche bildet, in einem Winkel derart angeordnet ist, daß sich ausgehend von der Bezugsfläche in Richtung auf das Mikrofon ein zunehmender Abstand zu einer Längsachse ergibt.

Eine weitere Möglichkeit der Entkopplung des Mikrofons von der Hörkapsel wird dadurch erzielt, daß die Einsprache und die Bezugsfläche einander abgewandte Orientierungen aufweisen.

Zur einer einfachen fertigungstechnischen Realisierung der Orientierung der Schalldurchtrittsöffnung wird vorgeschlagen, daß eine von der Begrenzung aufgespannte Fläche geneigt zur Einsprache verläuft.

Insbesondere kann die Orientierung der Schalldurchtrittsöffnung auch dadurch geeignet gewählt werden, daß die Schalldurchtrittsöffnung eine Öffnungsfläche aufspannt, die sich geneigt zu Einsprache erstreckt.

Ergänzend oder alternativ zu einer geneigten Orientierung der Durchtrittsfläche ist es auch möglich, daß die Schalldurchtrittsöffnung aus mindestens zwei Teilöffnungen ausgebildet ist, die ineinander übergeleitete Schallkanäle mit einer Umgebung verbinden.

Eine Verwendung eines Gehäuses mit im wesentlichen rechtwinklig zueinander ausgerichteten Wandungen wird dadurch ermöglicht, daß eine der Teilöffnungen im wesentlichen in Richtung der Flächennormalen und eine weitere Teilöffnung quer zur Flächennormalen weist.

Zur Ausbildung eines Handapparates, der sowohl ohne einen üblichen Knick im Bereich des Verbindungselementes als auch mit verkürzten Abmessungen ausgebildet ist, wird vorgeschlagen, daß durch die Orientierung der Schalldurchtrittsöffnung mindestens teilweise eine Orientierung einer akustischen Empfindlichkeitskeule festgelegt ist.

In der Zeichnung ist ein Ausführungsbeispiel der Erfindung schematisch dargestellt. Es zeigen:
- Fig. 1:: eine Vorderansicht eines Handapparates,
- Fig. 2:: eine Seitenansicht des Handapparates nach Figur 1 gemäß Blickrichtung II-II,
- Fig. 3:: eine prinzipielle Darstellung der Empfindlichkeitskurve eines teilweise schallschnelleempfindlichen Gradientenmikrofones **und**
- Fig. 4:: eine Prinzipdarstellung der Richtcharakteristik eines Handapparates mit miteinander verbundenen schallführenden Kanälen, die unterschiedliche Orientierungen aufweisen und Schall in den Bereich einer Rückseite des Mikrofones leiten.

Der dargestellte Handapparat für ein Telefon besteht im wesentlichen aus einer Aufnahme (1), in deren Bereich ein Mikrofon (2) angeordnet ist und die Einsprache (12) bildet, sowie einer Aufnahme (3) für eine Hörkapsel (4). Ein Verbindungselement (5) verbindet als Abstandshalter die Aufnahme (1) mit der Aufnahme (3). Das Verbindungselement (5) ist als Hohlkörper ausgebildet, der mit einem von ihm umschlossenen Innenraum in Innenräume der Aufnahme (1) sowie der Aufnahme (3) einmündet. Insbesondere ist daran gedacht, die Aufnahmen (1, 3) und das Verbindungselement (5) aus einem einheitlichen Material, beispielsweise einem Kunststoff, auszubilden. Das Verbindungselement (5) erstreckt sich im wesentlichen linear entlang einer Längsachse (6). Eine Auflagelinie (16) kennzeichnet dabei die entsprechende Ablage auf einer Unterlage.

Die Hörkapsel (4) ist im Bereich einer Bezugsfläche (7) der Aufnahme (3) angeordnet, die in einem Winkel Alpha angeordnet ist und in Richtung auf das Mikrofon (2) mit einen zunehmender Abstand zur Längsachse (6) verläuft. Das Mikrofon (2) ist mit einer Membran (8) am Ende des Handapparates eingebaut. Insbesondere ist daran gedacht, das Mikrofon (2) als Gradientenmikrofon auszubilden, das bei Auftreten von Umgebungsgeräuschen eine erhebliche Dämpfung der Einwirkung dieser Umweltgeräusche ermöglicht. Hierdurch wird eine spezielle Richtcharakteristik erzielt. Die zusätzliche Zuführung der Umweltgeräusche in den Bereich des Mikrofoninnenraumes (9) erfolgt über Schalldurchtrittsöffnungen (10), die sich ausgehend von einer der Kapselaufnahme (3) abgewandt angeordneten Begrenzung (11) der Mikrofonaufnahme (1) in Richtung auf das Mikrofon (2) erstreckt.

Eine weitere Entkopplung des Mikrofones (2) von der Hörkapsel (4) erfolgt dadurch, daß im Bereich einer das Mikrofon (2) umfassenden Einsprache (12) der Aufnahme (1) eine Umrandung (13) angeordnet ist, die im wesentlichen u-förmig ausgebildet ist und einen Basisschenkel (14) sowie zwei Seitenschenkel (15) aufweist. Der Basisschenkel (14) erstreckt sich im wesentlichen quer zur Längsachse (6) und die Seitenschenkel (15) weisen eine in Richtung der Längsachse (6) verlaufende Orientierung auf. Diese in eine der Aufnahme (3) abgewandte Orientierung offene Ausrichtung der Umrandung (13) ermöglicht bei Ablage auf einer Platte eine gleichmäßige Zufuhr von Umgebungsgeräuschen sowohl in den Bereich einer der Einsprache (12) zugewandten Vorderseite der Membran (8) als auch mit Hilfe der Ausnehmung (10) in den Bereich der Rückseite der Membran (8).

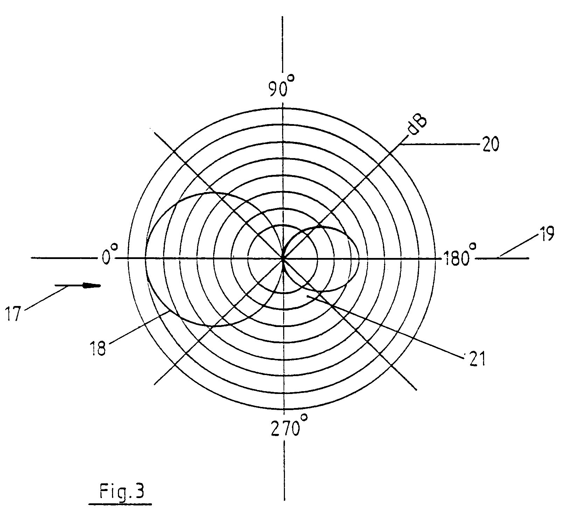

Bei der in Figur 3 dargestellten Charakteristik eines Gradientenmikrofones ist bei einer angenommenen Empfangsrichtung (17) eine Empfindlichkeitskurve (18) zu erwarten, die bezüglich eines Richtungskoordinatenkreuzes (19) sowie bezüglich eines Verstärkungskoordinatenkreuzes (20) den angegebenen Verlauf aufweist. Die Empfindlichkeitskeulen (18,21) kann je nach Schallwegführung so ausgelegt werden, daß eine Kardioide oder Doppelacht-Charakteristik entsteht.

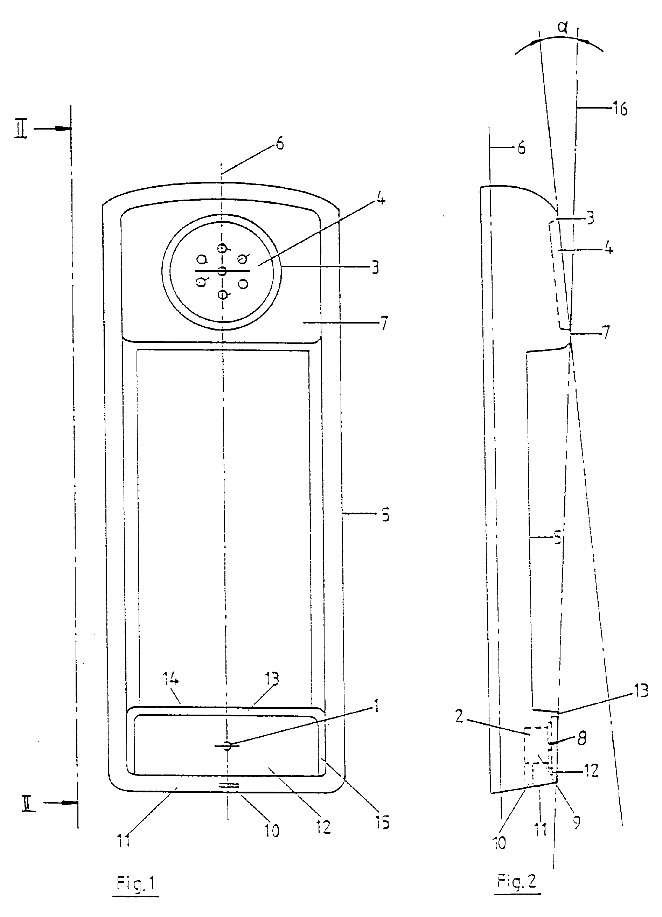

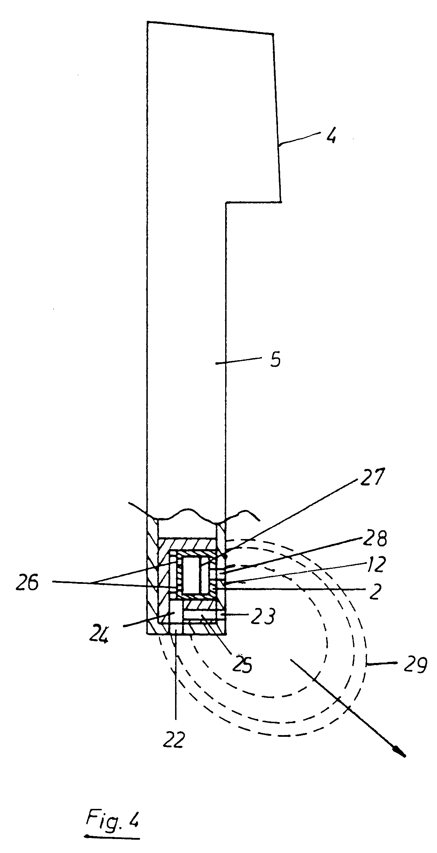

Im Gegensatz zur Darstellung in Figur 1 und 2, bei der die Schalldurchtrittsöffnung (10) geneigt zur Einsprache (12) angeordnet ist und hierdurch sowohl in Richtung einer Flächennormalen der Einsprache (12) als auch quer zu dieser Flächennormalen einwirkende Geräusche in den Bereich der Rückseite des Mikrofones (2) leitet, ist bei der Darstellung gemäß Figur 4 die Schalldurchtrittsöffnung (10) in Teilöffnungen (22,23) unterteilt. Die Teilöffnungen (22,23) verbinden jeweils schallführende Kanäle (24,25) miteinander und ermöglichen eine Schallzuführung in den rückwärtigen Bereich des Mikrofones (2). Ein Gehäuse des Mikrofones (2) weist im Bereich einer Rückseite Mikrofonöffnungen (26) auf, die einen Schallzutritt zu einer Membran (27) ermöglichen. Im Bereich der Einsprache (12) sind zum Eintritt des Nutzschalls Bohrungen (28) angeordnet. Durch die Orientierung der Teilöffnungen (22,23) ergibt sich die eingetragene Richtcharakteristik der Empfindlichkeitskeule (29).

Bei einer Benutzung des Handapparates wird dieser mit der Muschel in den Bereich eines Ohres eines Benutzers geführt und hier zur Anlage gebracht. In dieser Positionierung ist das Mikrofon (2) zwar in Richtung auf den Mund des Benutzers ausgerichtet, weist zu diesem jedoch einen ausreichenden Abstand auf, der nicht als störend empfunden wird. Der relativ zu einem üblichen Handapparat größere Abstand zum Mund des Benutzers wird durch die Verwendung eines Gradientenmikrofons ausgeglichen, das eine spezielle Richtcharakteristik aufweist und Umgebungsgeräusche nur mit einer geringen Intensität überträgt.

Durch das Zusammenwirken der in eine der Hörkapsel (4) abgewandte Richtung offenen Ausbildung der Umrandung (13) und des in die gleiche Richtung weisenden Anteiles der Schalldurchtrittsöffnung (10) wird gewährleistet, daß auch bei einem Ablegen des Handapparates auf einer akustisch harten Platte trotz der schrägen Ausrichtung der Empfindlichkeitskeule (29) eine gleichmäßige Zuleitung von Schallanteilen in den Bereich der Vorder- und Rückseite der Membran (27) erfolgt. Durch die Umrandung (13), die beispielsweise mit einer Höhe von etwa 1,5 mm ausgebildet wird, bleibt somit die Richtcharakteristik auch bei einer Ablage auf einer akustisch harten Platte erhalten. Durch die Umrandung (13) entsteht ein schallführender Kanal, der zusätzlich noch eine Drucktransformation zur Folge hat. Liegt die Umrandung (13) in einem Gesprächszustand des Handapparates nicht vollständig auf eine Ablagefläche auf, so wird der Schalldruck in dem Volumen, das von der Umrandung (13) begrenzt ist, reduziert, da in diesem Volumen nur der vergleichsweise geringere Schalldruck von der Rückseite vorhanden ist. Es wird somit ein Volumen mit geringem Druck mit einem Volumen eines höheren Druckes über eine kleine Öffnung verbunden. Hieraus resultiert eine entsprechende Zeitspanne für den Druckausgleich. Durch diese Konstruktion können somit Ungleichmäßigkeiten der Abdichtung bei einer Ablage des Handapparates ausgeglichen und die Pfeifsicherheit erhöht werden.

Ein weiterer Vorteil bei der Handhabung des Handapparates resultiert daraus, daß durch die Formgebung automatisch eine Positionierung vorgenommen wird, die außerhalb einer Atmungsluftströmung des Benutzers liegt. Hierdurch wird eine Störung der Sprachübertragung durch zischende Nebengeräusche vermieden.

## Patentansprüche

1. Handapparat für Telefone mit einem als Richtmikrofon ausgebildeten Mikrofon und einer Hörkapsel, die über ein Verbindungselement mit Abstand in Kapselaufnahmen angeordnet sind, dadurch gekennzeichnet, daß im Bereich der Aufnahme (1) für das Mikrofon (2) wenigstens eine Schalldurchtrittsöffnung (10) zur rückwärtigen Schallzuführung an einer Begrenzungswandung (11) angeordnet ist, sich im Bereich einer das Mikrofon (2) begrenzenden Einsprache (12) eine sich über die Einsprache (12) erhebende und das Mikrofon (2) bereichsweise umschließende Umrandung (13, 14, 15) erstreckt, die in einer der Hörkapsel (4) abgewandten Richtung unterbrochen ist und daß mindestens ein Teil der rückwärtigen Schalldurchtrittsöffnung in eine parallel zu einer Flächennormalen der Einsprache (12) orientierte Richtung und ein weiterer Teil der Schalldurchtrittsöffnung (10) quer zur Flächennormalen weist.

2. Handapparat nach Anspruch 1, dadurch gekennzeichnet, daß das Mikrofon (2) als ein eine seitliche Richtcharakteristik aufweisendes Gradientenmikrofon ausgebildet ist.

3. Handapparat nach Anspruch 1, dadurch gekennzeichnet, daß das Mikrofon (2) mit einer teilweisen Schnellempfindlichkeit zur Ausbildung einer eingeschränkten Achtercharakteristik ausgebildet ist.

4. Handapparat nach Anspruch 3, dadurch gekennzeichnet, daß die Umrandung (13) im wesentlichen u-förmig ausgebildet ist und sich mit einem Basisschenkel (14) im wesentlichen quer zur Längsachse (6) und mit Seitenschenkeln (15) im wesentlichen parallel zur Längsachse (6) erstreckt sowie derart angeordnet ist, daß der Basisschenkel (14) im Bereich einer der Begrenzung (11) abgewandten Ausdehnung der Umrandung (13) angeordnet ist.

5. Handapparat nach einem der Ansprüche 1 bis 4, dadurch gekennzeichnet, daß die Aufnahme für die Hörkapsel mit ihrer Muschel, die eine Bezugsfläche bildet, in einem Winkel derart angeordnet ist, daß sich ausgehend von der Bezugsfläche in Richtung auf das Mikrofon ein zunehmender Abstand zu einer Längsachse ergibt,

6. Handapparat nach einem der Ansprüche 1 bis 5, dadurch gekennzeichnet, daß die Einsprache (12) und die Bezugsfläche (7) einander abgewandte Orientierungen aufweisen.

7. Handapparat nach einem der Ansprüche 1 bis 6, dadurch gekennzeichnet, daß eine von der Begrenzung (11) aufgespannte Fläche geneigt zur Einsprache (12) verläuft.

8. Handapparat nach einem der Ansprüche 1 bis 7, dadurch gekennzeichnet, daß die Schalldurchtrittsöffnung (10) eine Öffnungsfläche aufspannt, die sich geneigt zu Einsprache (12) erstreckt.

9. Handapparat nach einem der Ansprüche 1 bis 8, dadurch gekennzeichnet, daß die Schalldurchtrittsöffnung (10) aus mindestens zwei Teilöffnungen ausgebildet ist, die ineinander übergeleitete Schallkanäle mit einer Umgebung verbinden.

10. Handapparat nach Anspruch 9, dadurch gekennzeichnet, daß eine der Teilöffnungen im wesentlichen in Richtung der Flächennormalen und eine weitere Detailöffnung quer zur Flächennormalen weist.

11. Handapparat nach einem der Ansprüche 1 bis 10, dadurch gekennzeichnet, daß durch die Orientierung der Schalldurchtrittsöffnung (10) mindestens teilweise eine Orientierung einer akustischen Empfindlichkeitskeule festgelegt ist.

## Claims

1. Handset for telephones, having a microphone in the form of a directional microphone and a receiver cup, which are disposed spaced apart by a connecting element in capsule-like receptacles, characterized in that in the region of the receptacle (1) for the microphone (2) at least one sound inlet opening (10) for backward sound feed is disposed adjacent to a boundary wall (11), extending in the region of a mouthpiece (12) delimiting the microphone (2) is a border (13, 14, 15), which is raised above the mouthpiece (12) and in sections encloses the microphone (2) and is interrupted in a direction remote from the receiver cup (4), and that at least one part of the backward sound inlet opening is directed in a direction oriented parallel to a surface normal of the mouthpiece (12) and a further part of the sound inlet opening (10) is directed at right angles to the surface normal.

2. Handset according to claim 1, characterized in that the microphone (2) takes the form of a pressure gradient microphone with a lateral pick-up characteristic.

3. Handset according to claim 1, characterized in that the microphone (2) is designed with a partial fast response to produce a limited bidirectional characteristic.

4. Handset according to claim 3, characterized in that the border (13) is substantially U-shaped and extends with a base limb (14) substantially at right angles to the longitudinal axis (6) and with side limbs (15) substantially parallel to the longitudinal axis (6) and is also arranged in such a way that the base limb (14) is disposed in the region of an extension of the border (13) remote from the boundary (11).

5. Handset according to one of claims 1 to 4, characterized in that the receptacle for the receiver cup with its earpiece, which forms a reference surface, is disposed at an angle in such a way that from the reference surface towards the microphone there is an increasing distance from a longitudinal axis.

6. Handset according to one of claims 1 to 5, characterized in that the mouthpiece (12) and the reference surface (7) are oriented so as to be turned away from one another.

7. Handset according to one of claims 1 to 6, characterized in that a surface defined by the boundary (11) extends obliquely relative to the mouthpiece (12).

8. Handset according to one of claims 1 to 7, characterized in that the sound inlet opening (10) defines an opening surface which extends obliquely relative to the mouthpiece (12).

9. Handset according to one of claims 1 to 8, characterized in that the sound inlet opening (10) is formed by at least two part-openings connecting sound channels, which are merged one into the other, to an environment.

10. Handset according to claim 9, characterized in that one of the part-openings is directed substantially in the direction of the surface normal and a further detail opening is directed at right angles to the surface normal.

11. Handset according to one of claims 1 to 10, characterized in that through the orientation of the sound inlet opening (10) an orientation of an acoustic sensitivity lobe is at least partially defined.

## Revendications

1. Combiné téléphonique équipé d'un microphone directionnel et d'un écouteur logés dans des alvéoles situées à une distance l'une de l'autre dans un élément de raccordement caractérisé en ce qu'au moins un orifice de captation du son provenant de l'arrière (10), situé dans une face latérale (11) du côté du microphone (2), est présent et qu'une paroi (13, 14, 15) située au dessus de l'aire de captation (12) du microphone couvre partiellement ce dernier, cette paroi étant interrompue du côté opposé à l'écouteur (4), et qu'au moins une partie de l'ouïe de captation de son (12) arrière est orientée parallèlement à la normale du plan de captation (12) et qu'une autre partie de l'orifice de captation du son (10) est orientée perpendiculairement à la normale du plan de captation.

2. Combiné téléphonique selon la revendication 1, caractérisé en ce que le microphone (2) est d'un type à gradient à caractéristique directionnelle latérale.

3. Combiné téléphonique selon la revendication 1, caractérisé en ce que le microphone (2) est partiellement sensible à la vitesse du signal sonore pour lui donner une caractéristique directionnelle en forme de huit asymétrique.

4. Combiné téléphonique selon la revendication 3, caractérisé en ce que la paroi (13) a, en partie, la forme d'un U dont la base (14) est principalement orientée perpendiculairement à l'axe longitudinal (6) et dont les faces latérales (15) sont principalement orientées parallèlement à l'axe longitudinal (6) et disposée de façon telle que la base (14) se trouve du côté d'une face de délimitation (11) opposé au prolongement de la paroi (13).

5. Combiné téléphonique selon les revendications 1 à 4, caractérisé en ce que le logement de la capsule écouteur et de sa grille, qui constitue une surface de référence, est disposé en un angle de façon telle que partant de la surface de référence vers le microphone la distance par rapport à l'axe longitudinal augmente.

6. Combiné téléphonique selon les revendications 1 à 5, caractérisé en ce que l'ouïe de captation du son (12) et la surface de référence (7) sont orientées dans des directions opposées.

7. Combiné téléphonique selon les revendications 1 à 6, caractérisé en ce qu'une surface située dans le plan de la face de délimitation (11) est inclinée par rapport à l'ouïe de captation du son (12).

8. Combiné téléphonique selon les revendications 1 à 7, caractérisé en ce que l'orifice de captation du son (10) est situé dans une surface inclinée par rapport à l'ouïe de captation du son (12).

9. Combiné téléphonique selon les revendications 1 à 8, caractérisé en ce que l'orifice de captation du son (10) est constitué d'au moins deux ouvertures qui conduisent les conduits acoustiques fusionnés dans un seul volume.

10. Combiné téléphonique selon les revendications 1 à 9, caractérisé en ce qu'une des ouvertures est principalement orientée dans le sens de la normale de la surface et qu'une autre ouverture est perpendiculaire à la normale de la surface.

11. Combiné téléphonique selon les revendications 1 à 10, caractérisé en ce que l'orientation de l'orifice de captation du son (10) détermine au moins partiellement l'orientation d'un cône de sensibilité acoustique.
